# EUROPÄISCHE PATENTSCHRIFT

(11) **EP 0 926 023 B1**
(45) Veröffentlichungstag und Bekanntmachung des Hinweises auf die Patenterteilung: **03.12.2003**
(21) Anmeldenummer: 98123161.6
(22) Anmeldetag: 04.12.1998
(51) Int. Cl.: B60R 25/04

(54) **Fahrzeugabsicherungsverfahren**
Vehicle security method
Procédé de sécurité pour véhicule

(30) Priorität: 18.12.1997 DE 19756428
(43) Veröffentlichungstag der Anmeldung: 30.06.1999
(73) Patentinhaber: Bayerische Motoren Werke Aktiengesellschaft, 80788 München (DE)
(72) Erfinder: Bartz, Rüdiger, 80809 München (DE)

(56) Entgegenhaltungen:
- DE-A- 4 331 300
- DE-A- 4 344 481
- DE-C- 19 707 058
- US-A- 5 519 255

## Beschreibung

Die Erfindung bezieht sich auf ein Fahrzeugabsicherungsverfahren mit den Merkmalen des Oberbegriffs von Patentanspruch 1.

Derartige Verfahren sind aus der DE 4344481 A1 und der DE 4331300 A1 bekannt. Dabei erfolgt die Zugangsberechtigung und die Inbetriebnahme des Fahrzeugs grundsätzlich mit Hilfe der physiologischen Merkmale des Benutzers, die in der Vergleichseinheit gespeichert sind. Mit Hilfe der Identifikationsinformation, die in dem separaten Speicher enthalten ist, werden die Berechtigungen der Benutzer verändert. Auch ist es für nicht berechtigte Benutzer möglich, mit Hilfe allein der Identifikationsinformation das Fahrzeug in Betrieb zu nehmen.

Aus der US 5,686,765 A und der US 5,661,451 A sind ferner Fahrzeugabsicherungsverfahren bekannt, bei denen .die Zugangsberechtigung und die Inbetriebnahme des Fahrzeugs mit Hilfe der physiologischen Merkmale des Benutzers erfolgt. Diese Verfahren erfordern einen Lernprozess, bei dem der Vergleichseinheit die physiologischen Merkmale der berechtigten Benutzer bzw. des berechtigten Benutzers mitgeteilt werden. Dies ist aufwendig und bereitet besonders dann, wenn das Fahrzeug von verschiedenen Benutzern berechtigterweise benutzt werden soll, praktisch unüberwindliche Schwierigkeiten. Dies gilt beispielsweise für Fahrzeuge bei einer Autovermietung oder aber auch bei einem Fahrzeug, das an einem Parkplatz abgestellt wird und durch den Parkplatzbetreuer während der Parkzeit mehrfach verfahren werden muss.

Der Erfindung liegt die Aufgabe zugrunde, ein Verfahren der eingangs genannten Art zu schaffen, bei dem sich die Benutzung des Fahrzeugs für Benutzer, deren physiologischen Merkmale gespeichert sind, gegenüber den Benutzern, deren physiologischen Merkmale nicht gespeichert sind, unterscheidet.

Die Erfindung löst diese Aufgabe durch die Merkmale des Patentanspruchs 1. Wird durch die Vergleichseinrichtung erkannt, dass es sich nicht um einen Benutzer handelt, dessen physiologische Merkmale gespeichert sind, wird die ID abgefragt. Da der berechtigte Benutzer den Speicher trägt, kann die ID auch ausgegeben werden und der Benutzer durch die Vergleichseinheit als berechtigt erkannt werden. Der Speicher selbst kann beispielsweise in einem üblichen mechanischen Zündschlüssel oder aber auch in einer Chipcard enthalten sein, die der Benutzer vom Besitzer des Fahrzeugs erhält. Neben einer derartigen fahrzeugbezogenen ID kann es sich bei der ID auch um eine personenbezogene handeln. Diese ist beispielsweise in einem elektronischen Führerschein oder einer elektronischen Identitätskarte enthalten und kann durch die Vergleichseinheit abgefragt werden. Im ersten Fall ist in der Vergleichseinheit als Referenz die fahrzeugbezogene ID enthalten, während im zweiten Fall die ID's der berechtigten Benutzer gespeichert sind. Es ist damit möglich, beispielsweise den Angehörigen einer Familie die Berechtigung zur Benutzung des Fahrzeugs einzuräumen, indem deren persönliche ID's gespeichert werden. Sie sind dann in der Lage, das Fahrzeug zu benutzen, ohne dass ihre physiologischen Merkmale gespeichert sind. Voraussetzung hierfür ist, dass ihre persönliche ID in der Vergleichseinheit vorgehalten wird.

Es ist mit Hilfe des Sonder-Freigabesignals nur ein eingeschränkter Betrieb des Fahrzeugs möglich. Dies gilt beispielsweise dann, wenn das Fahrzeug nur vorübergehend über das Sonder-Freigabesignal betrieben werden soll. Der eingeschränkte Betrieb kann beispielsweise zeitlich erfolgen. Mit der Erzeugung des Sonder-Freigabesignals verbunden kann ein definiertes Zeitmass von beispielsweise einer Stunde verbunden sein, während der das Fahrzeug betrieben werden kann. Danach soll das Fahrzeug nicht mehr betrieben werden können.

Der eingeschränkte Betrieb kann auch hinsichtlich der Leistungsmerkmale des Fahrzeugs erfolgen. Es ist dann beispielsweise nur noch möglich, das Fahrzeug bis zu einer Geschwindigkeit von 10 km/h zu betreiben. Dies gilt für den eingangs angenommenen Fall, bei dem das Fahrzeug auf einem Parkplatz zurückgelassen wird und dem Parkplatzpersonal der Speicher für die ID übergeben wird.

Der mit dem Sonder-Freigabesignal verbundene Betrieb des Fahrzeugs sollte sich von dem durch Erkennen der physiologischen Merkmale bewirkten Betrieb des Fahrzeugs unterscheiden. Dies kann beispielsweise dadurch erreicht werden, dass der über das Sonder-Freigabesignal ermöglichte Betrieb des Fahrzeugs dann abgeschlossen wird, wenn das Fahrzeug verriegelt wird. Damit ist es möglich, das Fahrzeug nach Erzeugen des Sonder-Freigabesignals uneingeschränkt oder ggf. in der angegebenen Weise beschränkt zu betreiben. Wird das Fahrzeug verriegelt, wird diese Betriebsmöglichkeit unterbrochen. Bis dahin aber, beispielsweise wenn sich das Fahrzeug auf einem Parkplatz befindet, kann das Fahrzeug uneingeschänkt benutzt werden.

Der Speicher kann, wie bereits angegeben, in einem mechanischen Zündschlüssel enthalten sein. Demgegenüber wird ein verbesserter Komfort für den Benutzer erzielt, wenn der Speicher in einem Transponder enthalten ist und die ID drahtlos abgefragt und durch den Transponder ebenfalls drahtlos übermittelt wird. Der Transponder kann Teil einer Funk- bzw. Infrarot-Fernbedienung sein, die beim Öffnen des Fahrzeugs selbsttätig abgefragt wird und ggf. selbsttätig den Zugang zum Fahrzeug ermöglicht (vgl. DE 35 36 377 A).

Eine derartige Fernbedienung ermöglicht es auch, das Antwortsignal auf einen willkürlichen Befehl hin, beispielsweise bei Aufgabe des Entriegelungsbefehls, aufzugeben und damit für einen berechtigten Benutzer die Inbetriebnahme des Fahrzeugs zu ermöglichen. Wiederum braucht der Benutzer hinsichtlich seiner physiologischen Merkmale nicht bekannt zu sein. Über das Antwortsignal erhält er zunächst Zugang zum Fahrzeug. Versucht er das Fahrzeug in Betrieb zu nehmen, wird erneut die ID abgefragt. Da er den Speicher bei sich trägt, wird die ID durch die Vergleichseinheit aufgenommen und das Sonder-Freigabesignal erteilt. Nur dann, wenn er bei Abfrage durch die Vergleichseinheit den Speicher nicht besitzt, kann er das Fahrzeug nicht starten. Damit wird der Fall ausgeschlossen, bei dem durch eine versehentliche Aufgabe eines Entriegelungssignals das Fahrzeug geöffnet wird und ein unberechtigter Benutzer versucht, das Fahrzeug zu starten.

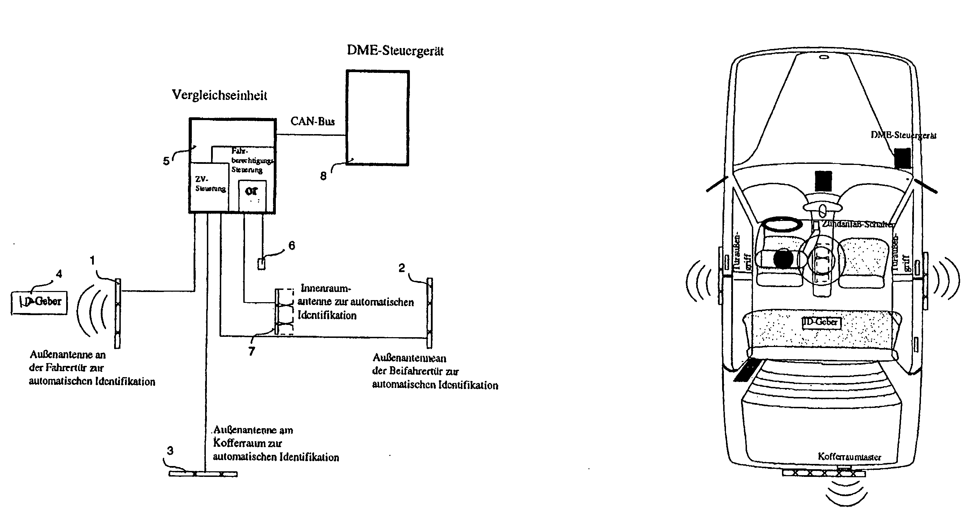

Anhand der Zeichnung ist die Erfindung weiter erläutert. In der einzigen Figur sind schematisch die verschiedenen Komponenten angegeben, mit denen das erfindungsgemäße Verfahren realisiert wird.

In einem nicht dargestellten Fahrzeug befinden sich an den beiden Seitentüren und an der Heckklappe (nicht dargestellt) Antennen 1, 2 und 3, über die dann, wenn die nicht dargestellte Zentralverriegelung im Schließzustand ist, ein Fragesignal ausgesandt wird, wenn sich eine Person dem Fahrzeug nähert bzw. eine Person versucht, das Fahrzeug zu öffnen. Der berechtigte Benutzer besitzt einen Transponder mit einem Speicher 4, in dem sich eine Identifikations-Information (ID) befindet, und gibt als Antwortsignal die ID aus. In einer fahrzeuginternen Vergleichseinheit 5 wird das Antwortsignal verifiziert und dann, wenn das Antwortsignal mit einem gespeicherten Antwortsignal übereinstimmt, die Entriegelung der Fahrzeugtüren und -klappen veranlaßt. Dieser Ablauf ist im einzelnen in der DE 35 36 377 A beschrieben.

Mit dem Entriegeln des Fahrzeugs nicht verbunden ist die gleichzeitige Ermöglichung der Inbetriebnahme des Fahrzeugs. Hierfür ist vielmehr eine zusätzliche Identifikation des Benutzers erforderlich. Hierfür gibt es zwei alternative Möglichkeiten. Die eine Möglichkeit ist, den berechtigten Benutzer anhand seiner physiologischen Merkmale zu identifizieren. Als Merkmale kommen ein Fingerabdruck oder aber auch ein Stimmvergleich oder aber beispielsweise eine Identifikation anhand des Retinabildes in Frage. Hierfür ist eine geeignete, nicht dargestellte Sensorik vorgesehen. Im Falle des Fingerabdrucks kann ein Betätigungsglied für den Anlasser des Fahrzeugs mit einer entsprechenden Erkennungssensorik und einer dieser nachgeschalteten Bildverarbeitungseinrichtung versehen sein.

Insbesondere dann, wenn die Überprüfung der physiologischen Merkmale ergibt, daß die des jeweiligen Benutzers nicht gespeichert sind, kann das Fahrzeug dennoch in Betrieb genommen werden. Dies erfolgt mit Hilfe einer Innenraumantenne 7, über die (erneut) ein Fragesignal ausgesandt wird. Dieses Fragesignal kann identisch mit dem von den Antennen 1 bis 3 ausgesandten Signal sein. Befindet sich nunmehr der ID-Geber 4 im Inneren des Fahrzeugs, so antwortet er auf das Fragesignal hin mit der Ausgabe der Identifikations-Information, die über die Antenne 7 aufgenommen und der Vergleichseinheit 5 zugeführt wird. Handelt es sich um eine auch gespeicherte ID, so wird ein Motorsteuergerät 8 von der Vergleichseinheit 5 darüber informiert, daß es sich um einen berechtigten Benutzer handelt. Die Inbetriebnahme des Fahrzeugs ist damit möglich.

Wird nach dem Betrieb des Fahrzeugs das Fahrzeug erneut verriegelt, beispielsweise indem über den Geber 4 ein Schließbefehl aufgegeben wird, so erlischt die Berechtigung des Benutzers, dessen Benutzungsberechtigung über die Antenne 7 abgefragt wurde. Für die Benutzer, deren physiologische Merkmale im Vergleicher 5 hinterlegt sind, bleibt sie hingegen erhalten.

Damit lassen sich insbesondere folgende Fälle wie folgt lösen:

Der Benutzer mit gespeicherten physiologischen Merkmalen kann das Fahrzeug ohne weiteres in Betrieb nehmen. Seine Berechtigung wird bei der Inbetriebnahme beispielsweise durch eine Fingerabdruckerkennung während der Anlasserbetätigung festgestellt. Das Öffnen des Fahrzeugs erfordert auch für ihn das Tragen des ID-Gebers 4, der beim Öffnen die ID abgibt und damit den Benutzer als berechtigt identifiziert. Alternativ ist es möglich, zumindest an einer der Fahrzeugtüren eine Erkennungseinrichtung für die physiologischen Merkmale des Benutzers vorzusehen, die im Falle des Fingerabdrucks beim Öffnen der Fahrzeugtür den berechtigten Benutzer identifiziert und damit das Öffnen der bis dahin verriegelten Fahrzeugtür ermöglicht.

Der Benutzer, dessen physiologische Merkmale nicht in der Vergleichseinheit 5 vorgehalten werden, kann dennoch das Fahrzeug in Betrieb nehmen, d. h. den Motor anlassen. Voraussetzung hierfür ist, daß sich der Geber 4 bei der Inbetriebnahme des Fahrzeugs im Fahrzeuginnem befindet und über die Antenne 7 der Frage-Antwort-Dialog durchgeführt wird und die ID in der Vergleichseinheit 5 vorliegt. Befindet sich der Geber 4 nicht im Fahrzeuginneren, kann das Fahrzeug nicht in Betrieb genommen werden.

Wird der Geber 4 nach der Inbetriebnahme des Fahrzeugs aus dem Innern des Fahrzeugs entfernt, kann das Fahrzeug weiter betrieben werden. Mit dem Verriegeln des Fahrzeugs erlischt die durch den vorangegangenen Frage-Antwort-Dialog erlangte Betriebsberechtigung.

Auf diese Weise ist ein Höchstmaß an Komfort bei gleichzeitig höchster Sicherheit vor einer unberechtigten Inbetriebnahme des Fahrzeugs erzielt.

## Patentansprüche

1. Fahrzeugabsicherungsverfahren, bei dem eine auf physiologische Merkmale des Benutzers gerichtete Erfassungseinheit mit einer Vergleichseinheit zusammenwirkt, in der die Merkmale der berechtigten Benutzer gespeichert sind und die für den berechtigten Benutzer ein Freigabesignal zur Inbetriebnahme des Fahrzeugs erteilt, und bei der die Vergleichseinheit dann, wenn der Benutzer nicht berechtigt ist, eine zusätzliche Identifikationsinformation (ID) abfragt, die in einem von Benutzer getragenen separaten Speicher enthalten ist, **dadurch gekennzeichnet, dass** die Vergleichseinheit beim Empfang der ID ein Sonder-Freigabesignal erteilt, das einen eingeschränkten Betrieb des Fahrzeugs ermöglicht.

2. Verfahren nach Anspruch 1, **dadurch gekennzeichnet, dass** das Sonder-Freigabesignal annulliert wird, wenn das Fahrzeug abgeschlossen wird.

3. Verfahren nach Anspruch 1 oder 2, **dadurch gekennzeichnet, dass** die ID drahtlos übermittelt wird.

4. Verfahren nach Anspruch 3, **dadurch gekennzeichnet, dass** die ID in einem Transponder enthalten ist.

5. Verfahren nach Anspruch 3, **dadurch gekennzeichnet, dass** der Transponder auf einen willkürlichen Befehl hin das Antwortsignal ausgibt.

6. Verfahren nach Anspruch 5, **dadurch gekennzeichnet, dass** die Vergleichseinheit bei Empfang des Antwortsignals den Zugang zum Fahrzeug ermöglicht.

7. Verfahren nach Anspruch 5, **dadurch gekennzeichnet, dass** die Vergleichseinheit die Inbetriebnahme des Fahrzeugs nur dann ermöglicht, wenn sich die ID im Innern des Fahrzeugs befindet.

## Claims

1. A vehicle security method, in which a device directed to the recognition of physiological characteristics of the user works together with a comparator unit in which the characteristics of the authorised users are stored, and which issues a release signal to the authorised users for the starting of the vehicle, and in which the comparator unit, if the user is not authorised, requests additional identification information (ID), which is contained in a separate store carried by the user, **characterised in that** the comparator unit on receipt of the ID issues a special release signal, which permits a limited operation of the vehicle.

2. A method according to claim 1, **characterised in that** the special release signal is annulled if the vehicle is locked.

3. A method according to claim 1 or claim 2, **characterised in that** the ID is transmitted without wires.

4. A method according to claim 3, **characterised in that** the ID is contained in a transponder.

5. A method according to claim 3, **characterised in that** the transponder transmits the response signal upon an arbitrary command.

6. A method according to claim 5, **characterised in that** the comparator unit facilitates access to the vehicle on receipt of the response signal.

7. A method according to claim 5, **characterised in that** the comparator unit only enables the starting of the vehicle if the ID is within the interior of the vehicle.

## Revendications

1. Procédé de sécurité pour véhicule dans lequel un module d'enregistrement axé sur les caractéristiques physiologiques de l'utilisateur interagit avec un module de comparaison dans lequel sont enregistrées les caractéristiques de l'utilisateur autorisé et qui délivre, pour l'utilisateur autorisé, un signal de validation pour la mise en service du véhicule et avec lequel le module de comparaison demande, lorsque l'utilisateur n'est pas autorisé, une information d'identification (ID) supplémentaire contenue dans une mémoire séparée portée par l'utilisateur,
**caractérisé en ce que**
le module de comparaison délivre, à la réception de l'ID, un signal de validation spécial, qui permet une utilisation limitée du véhicule.

2. Procédé selon la revendication 1,
**caractérisé en ce que**
le signal de validation spécial est annulé lorsque le véhicule est fermé à clé.

3. Procédé selon la revendication 1 ou 2,
**caractérisé en ce que**
l'ID est transmise sans fil.

4. Procédé selon la revendication 3,
**caractérisé en ce que**
l'ID est contenue dans un transpondeur.

5. Procédé selon la revendication 3,
**caractérisé en ce que**
le transpondeur émet le signal réponse à la suite d'un ordre volontaire.

6. Procédé selon la revendication 5,
**caractérisé en ce que** le
module de comparaison permet l'accès au véhicule à la réception du signal réponse.

7. Procédé selon la revendication 5,
**caractérisé en ce que**
le module de comparaison ne permet la mise en service du véhicule que si l'ID se trouve à l'intérieur du véhicule.
